# EUROPÄISCHE PATENTSCHRIFT

(11) **EP 1 594 716 B1**
(45) Veröffentlichungstag und Bekanntmachung des Hinweises auf die Patenterteilung: **12.05.2010**
(21) Anmeldenummer: 03773542.0
(22) Anmeldetag: 17.10.2003
(51) Int. Cl.: B60N 2/00, B60N 2/02, B60R 21/01

(54) **VORRICHTUNG ZUR EINSTELLUNG WENIGSTENS EINES FAHRZEUGSITZES**
DEVICE FOR ADJUSTING AT LEAST ONE VEHICLE SEAT
DISPOSITIF POUR REGLER AU MOINS UN SIEGE DE VEHICULE

(30) Priorität: 07.02.2003 DE 10305013
(43) Veröffentlichungstag der Anmeldung: 16.11.2005
(73) Patentinhaber: ROBERT BOSCH GMBH, 70442 Stuttgart (DE)
(72) Erfinder: BOTHE, Hans-Dieter, 30926 Seelze (DE); TRINH, Hoang, 31134 Hildesheim (DE); FREIENSTEIN, Heiko, 31141 Hildesheim (DE); ENGELBERG, Thomas, 31137 Hildesheim (DE)
(86) Internationale Anmeldenummer: PCT/DE2003/003448
(87) Internationale Veröffentlichungsnummer: WO 2004/069584

(56) Entgegenhaltungen:
- WO-A-01/45978
- WO-A-01/64468
- DE-C- 19 651 670
- US-A- 4 625 329
- US-A- 5 398 185
- US-A- 5 670 853
- US-A- 6 134 492

## Beschreibung

### Stand der Technik

Die Erfindung geht aus von einer Vorrichtung zur Einstellung wenigstens eines Fahrzeugsitzes nach der Gattung des unabhängigen Patentanspruchs.

Aus der gattungsbildenden WO 01/64468 A1 ist es bekannt, entsprechend einer verbesserten Ergonomie bzw. einem Sitzkomfort die Höhe der Sitzvorderkante bis zu einem vorbestimmten Neigungswinkel zu verschieben, die Sitzkissenneigung entsprechend einem Rumpfbeugewinkel komfortabler zu gestalten sowie die Einstellung der Kopfstütze entsprechend der Position des Kopfes einzustellen.

Aus der US 6,134,492 ist es bekannt, bei einer so genannten out-off-position das Fahrzeuginsassen den Airbag zu unterdrücken. Weiterhin ist es bekannt, dass bei einem Fahrzeugsitz mit verschiedenen Einstellungsmöglichkeiten der Fahrer diesen Sitz nicht in der Regel optimal einstellen kann.

Aus der US 5,398,185 ist es bekannt, mittels Kameras eine Sitzbelegung zu erfassen und auch die Sitzneigung sowie die Position des Sitzes auf den Sitzschienen zu erfassen, anhand von Kollisionsdaten wird eine Simulation der Fahrzeuginsassenbewegung durchgeführt und dann kann entsprechend ein so genannter Priloader eingesetzt werden, um den Sitz schnell nach hinten zu bewegen.

Aus der US 5,670,853 ist es bekannt, den Fahrzeuginsassen in eine verbesserte Rückhalteposition zu bringen.

Aus der US 4,625,329 ist es bekannt, in Abhängigkeit von der Position des Fahrzeuginsassen eine Kopfstützenanpassung vorzunehmen.

Aus DE 196 51 670 C1 ist eine Vorrichtung zur sitzpositionsgerechten Einstellung von Sitzkomponenten eines Fahrzeugsitzes bekannt. Dabei wird insbesondere in Abhängigkeit von einem Sensorsignal eine Kopfstütze automatisch an den Fahrzeuginsassen angepasst, um beispielsweise bei einem Heckaufprall den Fahrzeuginsassen besser zu schützen.

### Vorteile der Erfindung

Die erfindungsgemäße Vorrichtung zur Einstellung wenigstens eines Fahrzeugsitzes mit den Merkmalen des unabhängigen Patentanspruchs hat demgegenüber den Vorteil. Es ist bekannt, dass die Vorrichtung durch Verwendung einer berührungslos messenden Sensorik die Pose der Person während des Fahrvorgangs besser überwachen kann, um so die Person besser bei ihren Bewegungen durch die Veränderung der Sitzkontur zu unterstützen bzw. zu sichern. Die Sensorik kann dabei bild- oder entfernungsgebend ausgebildet sein. Insbesondere für Kraftfahrzeugsitze mit einem guten Seitenhalt kann dies besonders hilfreich sein, erfindungsgemäß bei einer Rückwärtsdrehung des Oberkörpers beim Rückwärtsfahren. Insgesamt steigert dies den Sitzkomfort im Fahrzeug.

Durch die in den abhängigen Ansprüchen angegebenen Maßnahmen und Weiterbildungen sind vorteilhafte Verbesserungen der im unabhängigen Patentanspruch angegebenen Vorrichtung zur Einstellung wenigstens eines Fahrzeugsitzes möglich.

Besonders vorteilhaft ist, dass die bildgebende Sensorik Videosensoren aufweist, die monokular, stereoskopisch oder entfernungsmessend ausgebildet sind, um eine besonders gute Erfassung des Fahrzeuginsassen bzw. seiner Pose zu ermöglichen. Die bildgebende Sensorik kann neben der Pose auch die Blickrichtung oder die Orientierung und die Position des Kopfes erfassen, um eine geeignete Unterstützung der Bewegungen des Fahrzeuginsassen zu ermöglichen.

Darüber hinaus können zusätzlich Signale von Sensoren zur Erfassung kinematischer Größen im Fahrzeug zur Einstellung der Sitzkontur verwendet werden. Zu solchen Sensoren zählen insbesondere Geschwindigkeits-, Beschleunigungs- und Rollover-Sensoren oder auch Sensoren, die erfassen, dass ein Rückwärtsgang eingestellt ist, um erfindungsgemäß die besondere Sitzposition beim Rückwärtsfahren des Fahrers zu unterstützen.

Zusätzlich sind noch Sensoren einsetzbar, die die aktuelle Einstellung der Sitzkontur direkt aufnehmen. Dies sind beispielsweise Sensoren, die direkt den Aktuatoren zugeordnet sind, um die Bewegung der beweglichen Sitzelemente zu erfassen. Dies können Dehnmess-Streifen sein oder auch magnetische Konzepte, beispielsweise über Hall-Elemente. Diese Sensoren ermöglichen dann eine Rückkopplung, ob die Veränderung der Sitzkontur für die aktuelle Pose des Fahrers optimal ist.

### Zeichnung

Ausführungsbeispiele der Erfindung sind in der Zeichnung dargestellt und werden in der nachfolgenden Beschreibung näher erläutert.

Es zeigen
- Figur 1: ein erstes Ausführungsbeispiel der erfindungsgemäßen Vorrichtung und
- Figur 2: ein zweites Ausführungsbeispiel der erfindungsgemäßen Vorrichtung.

### Beschreibung

Bisher erfolgt keine Anpassung von Fahrzeugsitzen an die jeweilige Sitzpose des Fahrzeuginsassen. Insbesondere Sitze mit gutem Seitenhalt erschweren bislang bestimmte Bewegungen, zum Beispiel die Körperdrehung des Fahrers beim Rückwärtseinparken. Erfindungsgemäß wird daher eine Vorrichtung zur Einstellung wenigstens eines Fahrzeugsitzes vorgeschlagen, die die Veränderung der Sitzkontur in Abhängigkeit von einem Signal einer berührungslos messenden Sensorik ermöglicht, die solche Posen des Fahrzeuginsassen sicher erfasst. Dabei kann die Sensorik bildgebend oder entfernungsmessend ausgebildet sein. Dies steigert den Fahrkomfort und erleichtert das Steuern des Fahrzeugs. Weiterhin kann damit die Sicherheit erhöht werden, indem der Fahrzeuginsasse auf einen Crash entsprechend durch die Anpassung des Sitzes optimal vorbereitet wird.

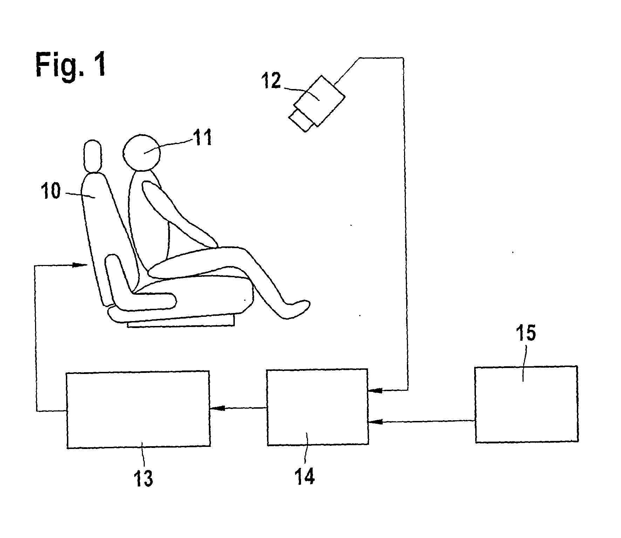

Figur 1 zeigt in einem ersten Ausführungsbeispiel die erfindungsgemäße Vorrichtung zur Einstellung wenigstens eines Fahrzeugsitzes. D.h. die Vorrichtung kann auch zur Einstellung mehrerer Fahrzeugsitze, insbesondere aller Fahrzeugsitze eines Fahrzeugs verwendet werden. Es ist jedoch möglich, dass für jeden Fahrzeugsitz eine eigene Vorrichtung vorgesehen ist.

Ein Sitz 10 weist eine darauf befindliche Person 11 auf. Diese Person wird durch einen bildgebenden Sensor 12 in ihrer Pose erfasst. Auch die Kopfposition und die Blickrichtung der Person werden durch die bildgebende Sensorik 12 ermittelt. Dazu weist die bildgebende Sensorik 12 entsprechende Auswertemittel auf, die dann in Abhängigkeit von der erkannten Pose der Kopfposition und der Blickrichtung der Person ein Signal an einen Regler 14 übertragen. Die bildgebende Sensorik 12 kann insbesondere als Videosensor ausgeführt sein. Dieser Videosensor kann monokular, stereoskopisch oder direkt tiefenmessend (z.B. Time-of-Flight-Messprinzip) ausgeführt sein, es kann auch ein ganzes Array von Videosensoren vorgesehen sein. Anstatt eines Videosensors kann die bildgebende Sensorik auch andere Strahlungen verwenden. Dazu zählen beispielsweise Ultraschall oder auch Mikrowellensignale sowie Infrarotsignale, die alle geeignet sind, eine Person in ihrer Pose zu erfassen und zu überwachen. Alternativ ist es möglich, dass die Sensorik 12 entfernungsmessend ausgebildet ist.

Die Auswertemittel, also beispielsweise ein Prozessor mit entsprechendem Speicher, können der bildgebenden Sensorik direkt zugeordnet sein, oder auch abgesetzt davon in einem Steuergerät. Die bildgebende Sensorik 12 kann dabei vorzugsweise an einen Bus angeschlossen sein, der mit dem Regler 14 verbunden ist. Dann weist die bildgebende Sensorik einen Buscontroller auf, der die Kommunikation über den Bus ermöglicht. Alternativ ist es möglich, dass eine Zweidrahtverbindung zwischen der bildgebenden Sensorik 12 und dem Regler 14 vorliegt, wobei vor allem eine unidirektionale Datenübertragung von der bildgebenden Sensorik 12 zum Regler 14 notwendig ist. Dies ergibt sich daraus, dass lediglich die Signale, die die Pose der Person 11 wiedergeben, an den Regler 14 übertragen werden müssen, so dass der Regler 14 die notwendigen Einstellungen am Sitz 10 vornehmen kann. Sind auch Testmodi oder Steuerungssignale für die bildgebende Sensorik 12 möglich, kann die Kommunikation zwischen dem Regler 14 und der bildgebenden Sensorik 12 bidirektional ausgeführt sein.

Der Regler 14 ist ebenfalls eine Prozessoreinheit, der die Signale der bildgebenden Sensorik 12, die die Pose der Person 11 wiedergeben, auswertet, und in Abhängigkeit davon ein Regelsignal erzeugt. Dieses Regelsignal erzeugt der Regler 14 mittels einer Kennlinie für die Sitzkontureinstellung, die der Regler 14 aus einer Datenbank 15 gewinnt. Diese Datenbank 15 kann ein einfacher Speicher sein, der dem Regler 14 zugeordnet ist und die Kennlinien dauerhaft abspeichern kann. Es kann sich jedoch auch um eine Datenbank 15 handeln, die über einen Bus mit dem Regler 14 verbunden ist. Der Regler 14 überträgt dann das Regelsignal an eine Aktuatorik 13 zur Einstellung der Sitzkontur. Diese Aktuatorik ist durch entsprechende Elektromotoren gekennzeichnet, die die beweglichen Teile des Sitzes 10 verändern können. Zu solchen beweglichen Teilen gehört die Kopfstütze, die verschiedenen Polster der Rückenlehne und auch seitliche Polster des Sitzes 10. Beispielsweise kann dann das Polster der Rücklehne, das einer Oberkörperdrehung zugewandt ist, zurückgefahren werden, während das der Oberkörperdrehung abgewandte Polster der Rückenlehne zur Unterstützung weiter ausgefahren werden kann.

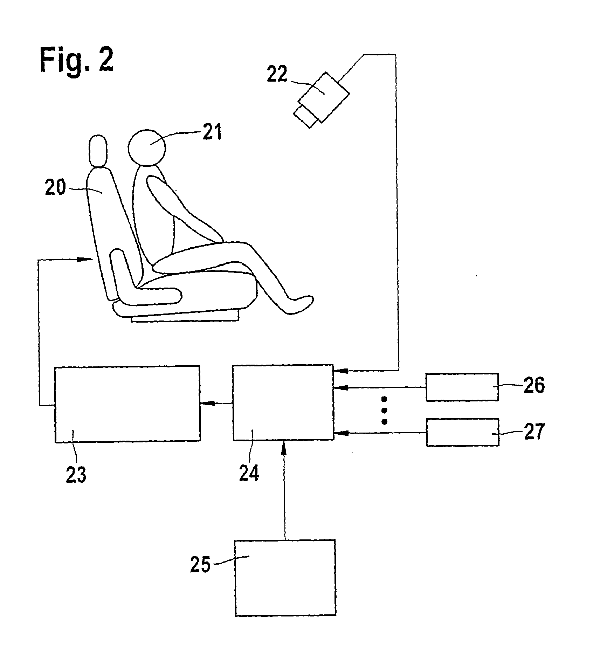

Figur 2 zeigt ein zweites Ausführungsbeispiel der erfindungsgemäßen Vorrichtung. Ein Sitz 20 weist wiederum eine Person 21 auf. Diese Person, die auf dem Sitz 20 sitzt, wird durch eine bildgebende Sensorik 22 sensiert. Wie bereits oben beschrieben, erzeugt die bildgebende Sensorik 22 ein in Abhängigkeit von der Pose der Person 21 erzeugtes Signal an den Regler 24. Neben der Pose können auch die Kopfposition der Person 21 bzw. deren Blickrichtung Einfluss auf das von der bildgebenden Sensorik 22 an den Regler 24 übertragene Signal nehmen. Der Regler 24 verwendet wieder eine Datenbank 25, um eine Kennlinie für die Sitzkontureinstellung zu laden. Zusätzlich sind an den Regler 24 nunmehr Sensoren 26 und 27 angeschlossen, die kinematische Größen des Fahrzeugs erfassen, beispielsweise die Geschwindigkeit oder auftretende Beschleunigungen. Diese Sensorsignale können beispielsweise von einem ESP-Steuergerät oder auch von einem Airbagsteuergerät oder einer kinematischen Sensorplattform stammen. Weitere Signale, beispielsweise welcher Gang eingestellt wird, insbesondere der Rückwärtsgang, können hier an den Regler 24 übertragen werden, um eine optimale Einstellung der Sitzkontur zu ermöglichen. Darüber hinaus können hier weitere Sensoren vorgesehen sein, die die Sitzkontur, die gerade eingestellt ist, direkt aufnehmen, um eine Rückkopplung für den Regler 24 zu ermöglichen. Der Regler 24 überträgt wiederum dann sein Stellsignal an eine Aktuatorik 23 zur Einstellung der Sitzkontur des Sitzes 20.

Die erfindungsgemäße Vorrichtung kann auch mit einem Rückhaltesystem verbunden sein, um eine Person in Abhängigkeit von der gemessenen Pose entsprechend auf einen Crash vorzubereiten. Insbesondere, wenn eine Gefahrensituation erkannt wird, beispielsweise durch Precrashsensoren oder durch Signale von einem ESP-Steuergerät, das beispielsweise ein Schleudern anzeigt, kann eine Person bei einer hohen Wahrscheinlichkeit eines Unfalls durch Veränderung der Sitzkontur auf einen solchen Crash vorbereitet werden. Dabei kann die erfindungsgemäße Vorrichtung eine bildgebende Sensorik mit beispielsweise einer Insassenerkennung für ein Rückhaltesystem teilen.

## Patentansprüche

1. Vorrichtung zur Einstellung wenigstens eines Fahrzeugsitzes (10, 20), wobei die Vorrichtung zur automatischen Anpassung des wenigstens einen Fahrzeugsitzes (10, 20) konfiguriert ist, wobei die Vorrichtung derart konfiguriert ist, dass die Vorrichtung in Abhängigkeit von einem Signal einer berührungslos messenden Sensorik (12, 22) die einen Fahrzeuginsassen (11, 21) auf dem Fahrzeugsitz (10, 20) erfasst, eine Kontur des wenigstens einen Fahrzeugsitzes (10, 20) verändert, **dadurch gekennzeichnet, dass** die Vorrichtung zur Unterstützung einer Rückwärtsdrehung des Oberkörpers des Fahrzeuginsassen beim Rückwärtsfahren konfiguriert ist.

2. Vorrichtung nach Anspruch 1, **dadurch gekennzeichnet, dass** die Sensorik (12, 22) als eine monokulare, stereoskopische oder entfernungsmessende Videosensorik ausgebildet ist.

3. Vorrichtung nach Anspruch 1 oder 2, **dadurch gekennzeichnet, dass** die berührungslos messende Sensorik (12, 22) Ultraschall- und/oder Mikrowellensensoren aufweist.

4. Vorrichtung nach einem der vorhergehenden Ansprüche, **dadurch gekennzeichnet, dass** die Sensorik (12, 22) zur Erfassung einer Pose des Fahrzeuginsassen (11, 21), seiner Blickrichtung und Kopfhaltung konfiguriert ist.

5. Vorrichtung nach einem der vorherigen Ansprüche, **dadurch gekennzeichnet, dass** die Vorrichtung mit Sensoren zur Erfassung kinematischer Größen verbindbar ist, wobei die Vorrichtung die Kontur zusätzlich in Abhängigkeit von wenigstens einem Signal dieser Sensoren verändert.

6. Vorrichtung nach einem der vorhergehenden Ansprüche, **dadurch gekennzeichnet, dass** die Vorrichtung mit einem Rückhaltesystem derart verbindbar ist, dass die Sitzkontur zur Minimierung einer Verletzungsgefahr des Fahrzeuginsassen (11, 21) angepasst wird.

7. Vorrichtung nach Anspruch 1, **dadurch gekennzeichnet, dass** die Rückwärtsdrehung so unterstützt wird, dass ein erstes Polster der Rückenlehne, das der Oberkörperdrehung zugewandt ist, zurückfahrbar ist, während ein zweites, der Oberkörperdrehung abgewandtes Polster der Rückenlehne zur Unterstützung weiter ausfahrbar ist.

## Claims

1. Apparatus for adjusting at least one vehicle seat (10, 20), with the apparatus being designed to automatically adapt the at least one vehicle seat (10, 20), with the apparatus being designed in such a way that the apparatus changes a contour of the at least one vehicle seat (10, 20) as a function of a signal from a sensor system (12, 22) which performs measurements in a contact-free manner and detects a vehicle occupant (11, 21) on the vehicle seat (10, 20), **characterized in that** the apparatus is designed to assist a backward rotation of the upper body of the vehicle occupant when moving backwards.

2. Apparatus according to Claim 1, **characterized in that** the sensor system (12, 22) is in the form of a monocular, stereoscopic or distance-measuring video sensor system.

3. Apparatus according to Claim 1 or 2, **characterized in that** the sensor system (12, 22), which performs measurements in a contact-free manner, has ultrasound and/or microwave sensors.

4. Apparatus according to one of the preceding claims, **characterized in that** the sensor system (12, 22) is designed to detect a posture of the vehicle occupant (11, 21), the direction in which the said vehicle occupant is looking, and the position of the head of the said vehicle occupant.

5. Apparatus according to one of the preceding claims, **characterized in that** the apparatus can be connected to sensors for detecting kinematic variables, with the apparatus additionally changing the contour as a function of at least one signal from these sensors.

6. Apparatus according to one of the preceding claims, **characterized in that** the apparatus can be connected to a restraint system in such a way that the seat contour is adapted in order to minimize the risk of injury to the vehicle occupant (11, 21).

7. Apparatus according to Claim 1, **characterized in that** the backward rotation is assisted such that a first cushion of the backrest, which first cushion faces the upper body rotation, can be retracted, while a second cushion of the backrest, which second cushion faces away from the upper body rotation, can be extended further, in order to provide assistance.

## Revendications

1. Dispositif pour ajuster au moins un siège de véhicule (10, 20), le dispositif étant configuré pour l'adaptation automatique de l'au moins un siège de véhicule (10, 20), le dispositif étant configuré de telle sorte que le dispositif modifie, en fonction d'un signal d'un système de capteurs à mesure sans contact (12, 22), qui détecte la présence d'un occupant du véhicule (11, 21) sur le siège du véhicule (10, 20), un contour de l'au moins un siège de véhicule (10, 20), **caractérisé en ce que** le dispositif est configuré pour assister une rotation vers l'arrière de la partie supérieure du corps de l'occupant du véhicule lors de la conduite en arrière.

2. Dispositif selon la revendication 1, **caractérisé en ce que** le système de capteurs (12, 22) est réalisé sous forme de système de capteurs vidéo mono-oculaire, stéréoscopique ou de mesure de distance.

3. Dispositif selon la revendication 1 ou 2, **caractérisé en ce que** le système de capteurs à mesure sans contact (12, 22) présente des capteurs à ultrasons et/ou à micro-ondes.

4. Dispositif selon l'une quelconque des revendications précédentes, **caractérisé en ce que** le système de capteurs (12, 22) est configuré pour détecter une position de l'occupant du véhicule (11, 21), la direction de son regard et sa posture de la tête.

5. Dispositif selon l'une quelconque des revendications précédentes, **caractérisé en ce que** le dispositif peut être connecté à des capteurs pour détecter des grandeurs cinématiques, le dispositif modifiant le contour en outre en fonction d'au moins un signal de ces capteurs.

6. Dispositif selon l'une quelconque des revendications précédentes, **caractérisé en ce que** le dispositif peut être connecté à un système de retenue de telle sorte que le contour du siège soit adapté de manière à minimiser un risque de blessure de l'occupant du véhicule (11, 21).

7. Dispositif selon la revendication 1, **caractérisé en ce que** la rotation vers l'arrière est assistée de telle sorte qu'un premier rembourrage du dossier, qui est tourné vers la rotation de la partie supérieure du corps, puisse être ramené en arrière, tandis qu'un deuxième rembourrage du dossier, opposé à la rotation de la partie supérieure du corps, peut être davantage sorti en vue de favoriser sa rotation.
